# EUROPEAN PATENT APPLICATION

(11) **EP 1 717 498 A1**
(43) Date of publication of application: **02.11.2006**
(21) Application number: 06113259.3
(22) Date of filing: 28.04.2006
(51) Int. Cl.: F16K 27/00

(54) **Valve mounting on aluminium profiles**

(30) Priority: 28.04.2005 DE 102005020185
(71) Applicant: Bosch Rexroth Teknik AB, 125 81 Stockholm (SE)
(72) Inventor: Andersson, Börje, 82077, Gnarp (SE); Skoglung, Per, 85651, Sundsvall (SE); Öhrmann, Anders, 71532, Odensbacken (SE)
(74) Representative: Maiwald Patentanwalts GmbH

(57) **Abstract**

Valve arrangement (1), comprising a profile element (2) having at least one inner through-going profile channel (6) along a profile axis (14) and one valve block (4), comprising at least one valve (3), whereas the valves (3) having at least one integrated through-going valve channel (5) along a valve axis (15), forming a through going channel of the valve block (4) whereby the valve block (4) is mounted on said profile element (2), whereby the valve block (4) is mounted on the profile element (2) in an area, where at least one outlet/inlet of at least one valve channel (5) is located, whereas at least one opening (7) in said profile element (2) provides an interconnection between the integrated valve channel (5) and the profile channel (6), so that the valve channel (5) and the profile channel (6) are in fluidic communication. Thus a valve arrangement is provided, whereby all valves are interconnected to at least one profile channel in a profile element, which features a minimum number of openings for the fluidic interconnection of the profile channel to at least one air port and valve channel, respectively, of each valve.

## Description

The present invention relates to a valve arrangement, comprising a profile element having at least one inner through-going profile channel along a profile axis and with one valve block, comprising one or a plurality of valves, whereas each valve features at least one integrated through-going valve channel along a valve axis, forming a through going channel of the valve block, whereby each valve channel is in fluidic communication with at least one adjacent valve channel, whereas the valve block is mounted on said profile element.

Valves and valve arrangements are usually applied to switch, control and operate compressed air in pneumatic systems. Various kinds of valves are known with a different number of ports for supply air, operation air ports and air exhaust ports. These valves are mounted at any place on construction elements of the machine or handling system. In many cases these construction elements consist of profile elements, which are part of the housing, the framework construction or the handling elements.

A special construction of profile elements feature the supply of compressed air in inner channels of the profile element for the supply of compressed air and/or for exhaust air of valves or valve blocks. Openings in the profile element at the place of mounting the valve or valve block provide an interconnection between the valve ports for air intake or the outlet and the inner channel of the profile elements. The said openings can be made by drilled holes into the profile element and the interface is sealed by sealing elements.

The product description "Basic Mechanic Elements" (Bosch Rexroth Group, Linear Motion and Assembly Technologies, issue 3 842529 141, 02/05) discloses a valve assembly, especially mounted on a profile element, comprising a valve or valve block with an air exhaust port, wherein the valve or valve block and at least one air silencer is mounted on a profile element, wherein the profile element features an inner channel.

The supply of compressed air for valves is realised by using the inner channels of profile elements. Standard aluminium profiles are made by metal extrusion moulding, whereas the inner channels of the profile element are of the kind of chambers, in order to reduce the weight and the need of material, but to keep a high mechanical stiffness of the profile elements. In consequence of the endless production method a sealing of the end faces of the profile elements by sealing end caps are necessary for pressurising the inner channels. As depicted in the product description, additionally the intersections between different profile elements are sealed by sealing elements.

Each valve features intake ports or outlet ports, which are each connected to the inner channel in the profile. The exhaust port is either connected to a sinter metal air silencer, which is located directly on the exhaust port of the valve, or connected to a separate air silencer in an end plate, positioned at the end of the valve block.

For this kind of valve arrangements rises the problem, that each valve requires a separate fluidic interconnection of the intake port for air supply or an outlet port for exhaust air to the inner profile channel in the profile element. Thus said arrangement requires a high number of openings along the profile element, whereas each opening needs high effort of shaping the hole border and a high surface quality due to a reliable sealing against a sealing element. In the case that each valve features a supply port and an exhaust port, which is located at one side of the valve body, at least two openings for each valve are necessary, in order to provide an interconnection between said valve ports and at least two separate inner channels of the profile element. Additionally the strength of the profile element is reduced due to the high number of drilled holes in the stressed outer wall material of the profile element.

Thus it is an objective of the present invention to provide a valve arrangement, wherein the valves are interconnected to at least one profile channel in a profile element, which features a minimum number of openings for the fluidic interconnection of the profile channel to at least one air port and at least one valve channel, respectively, of each valve.

This objective is achieved in the valve arrangement of claim 1. The invention discloses, that the valve block is mounted on a profile element with an area, where at least one outlet/inlet of at the least one valve channel is located, whereas at least one opening in said profile element provides an interconnection between the integrated valve channel and the profile channel, so that the valve channel and the profile channel are in fluidic communication.

This valve arrangement provides a minimum number of necessary openings in the profile element. The valves are in particular of the group of valves with integrated air channels for supply air and exhaust air (in-line-valves). By stacking the valves above each other in vertical direction to the profile element, the number of required openings, which has to be produced in the profile element, can be reduced. The valves are arranged in a valve block, whereas each valve features at least one integrated through-going valve channel along a valve axis, which is in fluidic communication with at least one adjacent valve channel. By stacking a plurality of valves to a valve block, said through-going valve channels are extended over the entire length of the valve block along the longitudinal valve axis. Thus said end of the valve block features the outlet/inlet of the valve channel, so that an interconnection to the profile channel of the profile element is enabled.

According to an advantageous embodiment, the profile element features only one profile channel, whereas the opening in the profile element provides an interconnection between the integrated valve channel and the profile channel in the profile element for a pressure air supply of the valve block, in order to supply the valve block by supply pressure air through the profile channel. In this embodiment of the present invention the interconnection between the valve channel and the profile channel relates to a central connection of supply air, whereas the through-going valve channel is preferably located in the middle section of the valve, whereby the interconnection to a profile channel is realised to a middle channel in a profile element, which is preferred to be embodied symmetrically. The compressed air supplies each valve in the valve block by only one single opening in the profile element, therewith the number of holes in the profile element is reduced to only one hole, whereby this advantage is independent of which number of valves are stacked in the valve block.

According to another advantageous embodiment of the present invention, the profile element features two profile channels and each valve features at least two valve channels, whereas two openings in the profile element provide separate interconnections between two separate integrated valve channels and said two separate profile channels in the profile element for exhaust air of the valve block, in order to expand the exhaust air into the profile channels. In this embodiment the profile element features two profile channels, whereas each profile channel is in fluidic interconnection to a separate exhaust air channel. Different groups of valves may feature one or a plurality of exhaust air channels, whereby the number of exhaust air interconnections to the profile leads to the relating number of openings in the profile element. The exhaust channels can be adapted with an central air silencer to the profile element and the inlet channels in the profile element can be mounted with FRL-units and/or a cut off valve.

Advantageously at least one mounting element is arranged between the valve block and the profile element, whereas the at least one mounting element comprises at least one through-going fluid passage for an interconnection between the at least one integrated valve channel of the valve block and the at least one opening in the profile element. Preferably the fluid suitable for passing the fluid passage is air. Said mounting plate offers the mechanical and fluidic interconnection between the valve block and the profile element. On one end face the mounting element features an adapting of the valve block and on the opposite end face of the mounting element is adapted to the surface of the profile element. Advantageously the mounting element features the possibility of different fluidic systems. Next to the interconnection of supply air of the profile channel to the relating valve channel it may be possible to connect both exhaust channels of the valve block to one opening in the mounting element, whereby both the supply air interconnection and the exhaust air interconnection can be realised to be in fluidic interconnection to the profile channel. Advantageously two or more mounting elements may be arranged between the valve block and the profile element. Preferably the mounting elements are sealed by at least one sealing element sandwiched between two adjacent mounting elements. In case that two mounting elements are mounted one on the valve block - one on the valve block and one on the profile element, the two mounting elements are fixed to each other and sealed by at least one sealing element.

It is an advantage of the invention, that an end plate is arranged at the end face of the valve block of the opposite side of the valve arrangement, where the mounting element is located, whereas the end plate features at least one exhaust air port, in order to provide an air exhaust for the integrated valve channels of the valve block. Due to the through-going valve channels it is necessary, that the end plate covers the last valve of the valve block, whereas the valve channels, which are interconnected to the profile channel has to be closed in a sealed way. In case of a single interconnection of the supply air by a central opening in the profile element, at least one exhaust air outlet is necessary. The exhaust outlet can comprise an air silencer, in order to reduce the outlet noise of the pressure air. According to the embodiment of the present invention, the end plate features two exhaust air outlets, whereby each inner valve channel for exhaust air ends in one air exhaust port in the end plate with two integrated air silencers. A possible modification of the embodiment can be a connection of both valve channels for exhaust air within the end plate, to provide only one single air exhaust port featuring only one air silencer.

Due to constructional reasons it is required, that the valve arrangement comprises con-rods and/or screw elements, whereas the con-rods and/or screw elements for screw elements provide a fastening of the mounting element, the valves and the end plate to the profile element. The said con-rods provide an integrated mounting technique, whereby all components are fastened in one block. This advantageous fastening technique reduces the number of fastening elements to only a few con-rods, whereby the number of con-rods can be ≥ 1 and ≤ 5, preferred ≥ 2 to ≤ 4 and most preferred 3. The con-rods can be provided as screws with long shafts, which extend over the entire valve arrangement comprising the mounting element, the valve block and the end plate, whereas the heads of the con-rods are located in the end plate. In a different embodiment of the fastening technique separate screw elements are arranged in the mounting element for mounting the mounting element to the profile element, whereas said con-rods are screwed in the mounting element. With this fastening technique the valve block with the mounting plate can be dismounted of the profile element without a disassembly of the entire valve block, and the fastening elements are separated to each other.

It is an advantage of the invention, that the profile element features grooves in the outer surface, whereas groove stones are arranged in said grooves in the profile element, whereas said con-rods and/or said screw elements are screwable into the groove stones for fastening the con-rods and/or the screw elements to the profile element. The grooves in the outer surface of the profile element are extending according to the longitudinal profile axis, whereby the valve block can be fastened at any position along the profile element and therewith at the required position, where the opening for the air interconnection is located in the profile element, in order to adjust the mounting element according to the opening along the profile element.

Advantageously the profile axis of the profile element and the valve axis of the at least one valve enclose an angle. Said angle could be of any value being in the range of 0° to 360°. Preferably the angle features a value of ≥ 70° and ≤ 110°, preferred a value between ≥ 80° and ≤ 100° and most preferred a value of 90°. The angle between the both axes can most preferred 90°, in order to provide a rectangular mounting element with surfaces, which are plan parallel. According to a different embodiment the angle also can be 0°, which means, that the mounting element features a mounting of the valve block in a position with parallel profile axis and valve axis. This can for instance be realised by a cube formed mounting element, which features two mounting surfaces each for the valve block and the profile element, which are not at opposite positions but are in a rectangular position to each other.

A substantially advantage of the embodiment is a profile element, that is selected from the group of standard profiles comprising standard aluminium profiles, whereas the profile element is manufactured by a manufacturing process selected from the group of extrusion moulding. Thus the profile element is a standardised mechanical component and is wide spread within the applications of handling systems, framework constructions and hydraulic and pneumatic housings. Preferably the standard profile element is a standard machine builder profile element.

The foregoing and other aspects will become apparent from the following detailed description of the invention when considered in conjunction with the enclosed drawings.

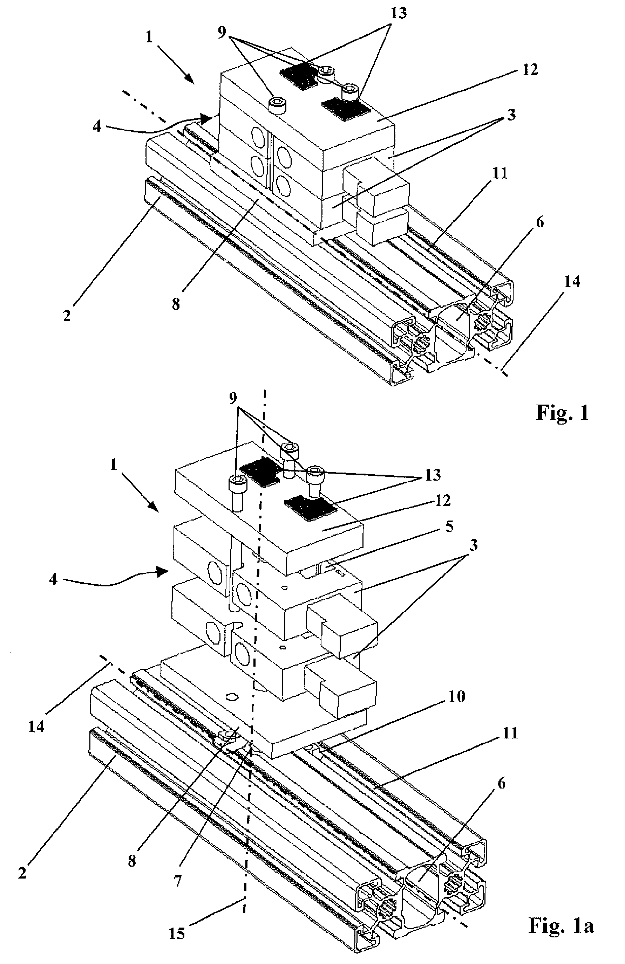

- Fig. 1: shows a perspective view of a valve arrangement with a pressure air supply through the profile element in a fastened state;
- Fig. 1 a: shows a perspective view of a valve according to figure 1, whereby the different parts are shown in an exploded view;
- Fig. 2: shows a perspective view of a valve arrangement with an additionally exhaust air connection to the profile element in a fastened state; and
- Fig. 2a: shows a perspective view of a valve according to figure 2, whereby the different parts are shown in an exploded view.

Fig. 1 shows a valve arrangement 1 according to the present invention. The valve arrangement 1 comprises a profile element 2 and several valves 3, arranged as a valve block 4. Each valve 3 comprises a through going valve channel 5 and the profile element 5 comprises a through going profile channel 6. Valve channel 5 and profile channel 6 are coupled by an opening 7. The valve block 4 is arranged on the profile element 5 by mounting elements 8. The valve block is kept together by con-rods 9. Additionally the valve block 4 is fastened to the profile element 4 by groove stones 10 (shown in fig. 1a), which are located in grooves 11 of the profile element 4. The valve block 4 further comprises an end plate 12, which features two exhaust air ports 13. The profile channel 6 is formed along a profile axis 14 and the valve channel 5 is formed along a valve axis 15. The two axis 14, 15 are arranged angularly to each other, whereby in this case the angle is about 90°.

The valve arrangement 1 in fig. 1 is shown in a fastened state and the valve arrangement 1 in fig. 1a is in state with separated parts. The shown embodiment relates to a pressure air supply through a through-going profile channel 6 in a profile element 2. The inner profile channel 6 is pressurised by pressure air, and an opening 7 in the profile element 2 provides an interconnection between the profile channel 6 and a valve channel 5, which is extended through the entire valve block 4 and the mounting plate 8. Therewith an interconnection for a fluidical communication of the profile channel 6 and the valve channel 5 is provided by only one single opening 7.

The mounting element 8 is located between the valve block 4, consisting of two single valves 3, and the profile element 2, whereas the contact surface of the mounting element 8 to the profile element 2 comprises adapted fittings for a reliable sealing of the compressed air to the opening 7 in the profile element 2. The valves 3 of the valve block 4 feature different valve channels 5, whereas two valve channels 5 are used for exhaust air and one valve channel 5 is used for supply air, whereas according to the shown embodiment the single supply air channel is connected to the profile channel 6 in the profile element 2. The valve arrangement 1 features an end plate 12, whereas the end plate features two exhaust air ports 13. Thus each valve channel 5 for exhaust air has an outlet in the end plate 12, whereas the air exhaust ports 13 feature an air silencer, which consists of a porous sinter metal material. In order to mount the valve arrangement 1 to the profile element 2, three con-rods 9 are arranged in the valve arrangement 1, whereas the con-rods 9 extend through the entire valve arrangement 1. In order to mount the con-rods 9 to the profile element 2, groove stones 10 are arranged in grooves 11, which extend along the profile axis 14 of the profile element 2 and are arranged in the outer surface of the profile element 2.

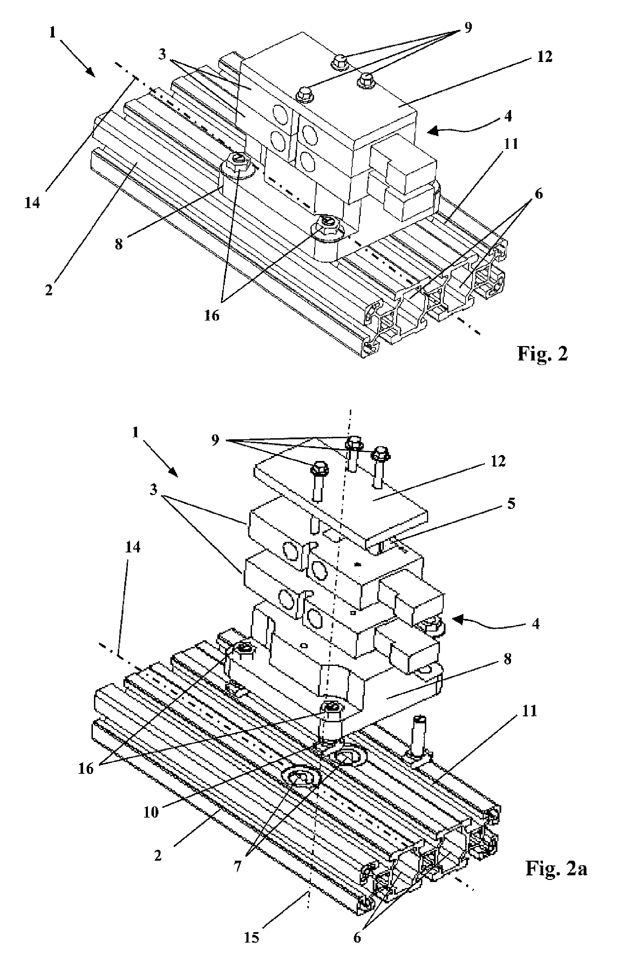

Fig. 2 and 2a show an embodiment of the invention with an interconnection of two separate valve channels 5 to two separate profile channels 6 in the profile element 2. The interconnection is provided by two separate openings 7 in the profile element 2, whereas the profile channels 6 are used for exhaust air. Therewith the exhaust air of the valves 3 expands into the inner profile channels 6. Due to the arrangement of expanding the exhaust air into the profile channels 6 the end plate 12 does not feature exhaust air ports, what means, that the end plate 13 covers each valve channel 5.

The mounting of the valve arrangement 1, comprising the mounting element 8, two valves 3 and the end plate 12 is realised by three con-rods 9, whereby the con-rods 9 are screwed into the mounting element 8, in order to provide a valve arrangement 1 in one unit, which can be disassembled from the profile element 2, without a complete loosening of the entire valve arrangement 1. Thus the mounting element 8 is fastened to the profile element 2 by four screw elements 16, which are screwed into groove stones 10, arranged in grooves 11.

The valve block 4 features a valve axis 15, which extends along the valve channels 5, whereas the valve axis 15 is oriented in an perpendicular direction to the profile axis 14, which extends in longitudinal direction to the profile element 2 and therewith to the profile channels 6.

The present invention is not limited by the embodiments described above, which are represented as examples only and can be modified in various ways within the scope of protection defined by the appended patent claims. Thus the invention is also applicable to different valve arrangements.

### List of Reference Numbers

- **1**: valve arrangement
- **2**: profile element
- **3**: valve
- **4**: valve block
- **5**: valve channel
- **6**: profile channel
- **7**: opening
- **8**: mounting element
- **9**: con-rod
- **10**: groove stone
- **11**: groove
- **12**: end plate
- **13**: exhaust air port
- **14**: profile axis
- **15**: valve axis
- **16**: screw element

## Claims

1. Valve arrangement (1), comprising a profile element (2) having at least one inner through-going profile channel (6) along a profile axis (14) and one valve block (4),
comprising at least one valve (3) having at least one integrated through-going valve channel (5) along a valve axis (15) forming a through going channel of the valve block (4),
whereby the valve block (4) is mounted on said profile element (2),
**characterised in**
**that** the valve block (4) is mounted on the profile element (2) with an area, where at least one outlet/inlet of the at least one valve channel (5) is located,
whereas at least one opening (7) in said profile element (2) provides an interconnection between the valve channel (5) and the profile channel (6), so that the valve channel (5) and the profile channel (6) are in fluidic communication.

2. Valve arrangement (1) according to claim 1,
**characterised in**
**that** the profile element (2) features only one profile channel (6) for a pressure air supply of the valve block (4), in order to supply the valve block (4) by supply pressure air through the profile channel (6).

3. Valve arrangement (1) according to claim 1,
**characterised in**
**that** the profile element (2) features two profile channels (6) and each valve (3) features at least two valve channels (5), whereas two openings (7) in the profile element (2) provide separate interconnections between said two separate integrated valve channels (5) and said two separate profile channels (6) in the profile element (2) for supply air and exhaust air of the valve block (4), respectively.

4. Valve arrangement (1) according to claims 1 to 3,
**characterised in**
**that** at least one mounting element (8) is arranged between the valve block (4) and the profile element (2), whereas the at least one mounting element (8) comprises at least one through-going fluid passage for an interconnection between the at least one integrated valve channel (5) and the at least one opening (7) in the profile element (2).

5. Valve arrangement (1) according to claims 1,2 and 4,
**characterised in**
**that** an end plate (12) is arranged at the end face of the valve block (4) of the opposite side of the valve arrangement (1), where the mounting element (8) is located, whereas the end
plate (12) features at least one exhaust air port (13), in order to provide an air exhaust for the integrated valve channels (5).

6. Valve arrangement (1) according to at least one of the preceding claims,
**characterised in**
**that** the valve arrangement (1) comprises con-rods (9) and/ or screw elements (16), whereas the con-rods (9) and/ or screw elements (16) provide a fastening of the mounting element (8), the valves (3) and the end plate (12) to the profile element (2).

7. Valve arrangement (1) according to claim 6,
**characterised in**
**that** the profile element (2) features grooves (11) in/at the outer surface, whereas groove stones (10) are arranged in said grooves (11) in the profile element (2), to which said con-rods (9) and/or said screw elements (16) are screwable, for fastening the con-rods (9) and/or the screw elements (16) to the profile element (2).

8. Valve arrangement (1) according to at least one of the preceding claims,
**characterised in**
**that** the profile axis (14) of the profile element (2) and the valve axis (15) of the at least one valve (3) enclose an angle featuring a value of ≥ 70° and ≤ 110°, preferred a value between ≥ 80° and ≤ 100° and most preferred a value of about 90°.

9. Valve arrangement (1) according to at least one of the preceding claims,
**characterised in**
**that** the profile element (2) is selected from the group of standard profiles comprising standard aluminium profiles, whereas the profile element (2) is manufactured by a manufacturing process selected from the group of extrusion moulding.
